Europäisches Patentamt

European Patent Office

Office européen des brevets

(19)

(11) **EP 1 411 621 A1**

(12) **EUROPÄISCHE PATENTANMELDUNG**

(43) Veröffentlichungstag:
**21.04.2004 Patentblatt 2004/17**

(51) Int Cl.7: **H02M 1/12**

(21) Anmeldenummer: **03103641.1**

(22) Anmeldetag: **01.10.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **16.10.2002 CH 17242002**

(71) Anmelder: **SCHAFFNER EMV AG**
**4542 Luterbach (CH)**
Benannte Vertragsstaaten:
**AT BE DE**

(72) Erfinder: **Beck, Fabian**
**4571, Lüterkofen (CH)**

(74) Vertreter: **Saam, Christophe**
**Patents & Technology Surveys SA**
**Terreaux 7**
**Case Postale 2848**
**2001 Neuchâtel (CH)**

(54) **Anpass-Schaltung zur Begrenzung der Reflexionen in Verbindungskabeln zu Drehfeldmaschinen**

(57) Anpass-Schaltung (3) zur Begrenzung der Reflexionen in Verbindungskabel (2) zu Drehfeldmaschinen (1), wobei die benannten Verbindungskabel (2) eine bestimmte Wellenimpedanz ($Z_w$) aufweisen, wobei die benannte Drehfeldmaschine eine bestimmte Drehfeldmaschinenimpedanz ($Z_{motor}$) aufweist, mit folgenden Merkmalen:

elektrische Anschlussmittel (30, 31, 32, 33) zum elektrischen Anschluss zwischen jeder Versorgungsphase der benannten Verbindungskabel (2)

und der benannten Drehfeldmaschine (4), mindestens ein elektrisches Filterelement (35), wobei ein Ende jedes Filterelements an eine Versorgungsphase geschaltet ist,

wobei jedes benannte Filterelement (35) eine positive Phasenlage in den hohen Frequenzen aufweist, derart, dass das kapazitive Verhalten der Schaltung der benannten Drehfeldmaschine (4) in den benannten hohen Frequenzen mindestens teilweise ausgeglichen wird.

Fig.6

EP 1 411 621 A1

**Beschreibung**

Die vorliegende Erfindung betrifft eine Anpass-Schaltung zur Begrenzung der Reflexionen in Verbindungskabeln zu Drehfeldmaschinen.

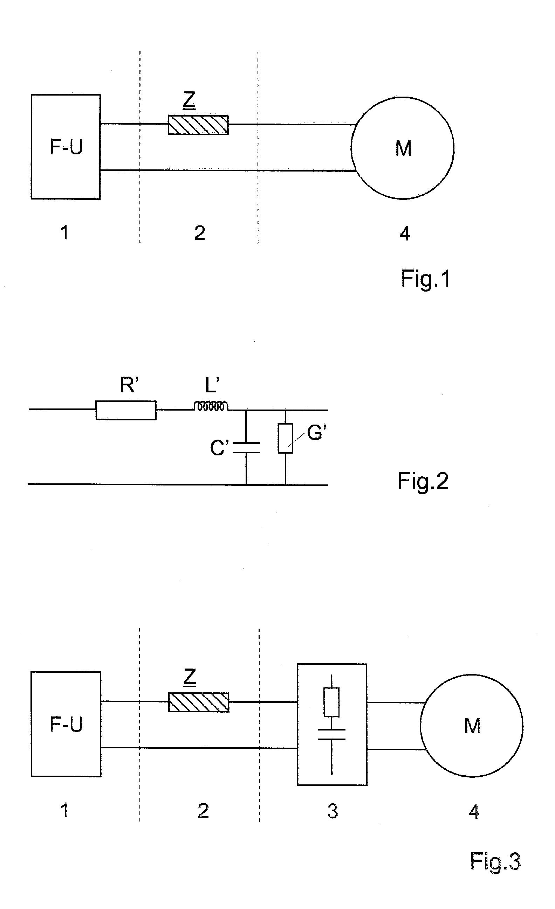

Die Figur 1 zeigt schematisch eine bekannte Anordnung mit einem Umrichter, beispielsweise einem Frequenzumrichter zur Drehzahlregelung, Verbindungskabel 2 und eine Drehfeldmaschine 4, zum Beispiel ein Motor. Die Drehfeldmaschine wird vom Umrichter 1 über die Verbindungskabel 2 elektrisch gespeist und gesteuert. Funkentstörungsfilter werden oft im Umrichter am Netz- und/oder an der Last-Seite vorgesehen, um die sehr steilen Spannungsimpulse, die von modernen Umrichtern erzeugt werden, zu begrenzen.

Es ist wünschenswert, dass der Umrichter für menschliche Operatoren zugänglich bleibt, während der Motor in der Nähe vom Anwendungsort installiert werden muss. Bei manchen Anlagen ist dies nur möglich, wenn der Umrichter 1 weit weg von der Drehfeldmaschine montiert ist und wenn lange Verbindungskabel verwendet werden.

Figur 2 zeigt eine elektrisch äquivalente Schaltung eines Stücks mit einer bestimmten Länge eines Verbindungskabels. Die Eingangsimpedanz des Stücks bei Kurzschluss am Kabel-Ende beträgt:

$$Z_k = \Gamma \cdot \tanh(\gamma \cdot l)$$

Die Eingangsimpedanz des Stücks bei Leerlauf beträgt:

$$Z_L = \Gamma \cdot \coth(\gamma \cdot l) = \Gamma \cdot \frac{1}{\tanh(\gamma \cdot l)}$$

Die Herleitung beträgt somit:

$$\Gamma = \sqrt{Z_K \cdot Z_L}$$

und

$$\gamma = \frac{1}{2l} \ln\left( \frac{1 + \sqrt{\dfrac{Z_K}{Z_L}}}{1 - \sqrt{\dfrac{Z_K}{Z_L}}} \right)$$

Die Ersatzwerte der äquivalenten Schaltung der Figur 2 können aus der folgenden Formel hergeleitet werden:

$$R' + j \cdot \omega \cdot L' = \gamma \cdot \Gamma$$

und

$$G' + j \cdot \omega \cdot C' = \frac{\gamma}{\Gamma}$$

so dass

$$R' = RE(\gamma \cdot \Gamma)$$

$$L' = IM(\gamma \cdot \Gamma)$$

$$G' = RE\left( \frac{\gamma}{\Gamma} \right)$$

$$C' = IM\left( \frac{\gamma}{\Gamma} \right)$$

Drehfeldmaschinen, insbesondere Motoren, haben bekanntlich ein massiv induktives Verhältnis in den tiefen und mittleren Frequenzbereichen. Da die charakteristische Impedanz des Motors meistens nicht an die Wellenimpedanz der Verbindungskabel angepasst ist, treten Reflexionen auf den Verbindungskabeln auf. Die Überspannungen, die dadurch entstehen, führen zu einer Belastung der Kabel und des Motors, zu Motorausfällen und zu Funktionsbeeinträchtigungen benachbarter Geräte.

Die Figur 3 zeigt schematisch eine bekannte Anordnung, die zusätzlich zu den Komponenten der Figur 1 noch eine Impedanzanpass-Schaltung 3 aufweist. Beispiele von solchen an sich bekannten Schaltungen werden unter anderem in den Patentschriften US5831410 und US-B1-6304013 beschrieben. Sie sind dazu bestimmt, elektrisch zwischen den Verbindungskabeln 2 und dem Motor 4 eingeschaltet zu werden, um die Impedanz dieser beiden Komponenten anzupassen. Zu diesem Zeck verwenden sie einen RC-Filter, mit welchem der induktive Charakter des Motors ausgeglichen wird und transiente Reflexionsimpulse gedämpft werden. Solche Anpass-Schaltungen werden im oder an das Gehäuse des Motors montiert.

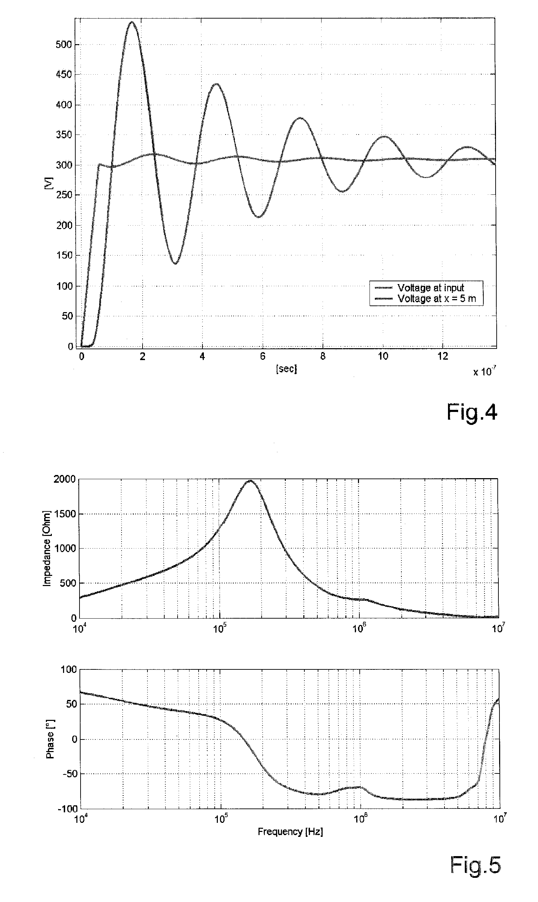

Obwohl diese bekannten Anpass-Schaltungen einen Teil der Reflexionen effektiv dämpfen, erweist sich ihre Wirkung manchmal als ungenügend, insbesondere bei längeren Verbindungskabeln. Die Figur 4 zeigt schematisch die durch Reflexionen entstandenen Überspannungen in einem System mit einem RC-Filter gemäss Figur 3. Die erste Kurve 10 zeigt die Spannung, die durch die Quelle (beispielsweise durch den Umrichter 1) erzeugt wird, während dessen die zweite Kurve 20 die Spannung fünf Meter weiter entfernt entlang des Verbindungskabels zeigt. Experimente und Simulationen habe gezeigt, dass in manchen Systemen die Überspannungen mehr als das Doppelte der erzeugten Spannung am Ausgang des Umrichters betragen können, und dies trotz einer eingesetzten Anpass-Schaltung gemäss Figur 3. Diese transienten Spannungen werden nur langsam (nach mehreren Mikrosekunden) effektiv unterdrückt.

Es ist daher ein Ziel der vorliegenden Erfindung, eine neue Anpass-Schaltung anzubieten, welche Spannungsreflexionen in Verbindungskabeln zu Drehfeldmaschinen effektiver als bekannte Filter begrenzen kann.

Erfindungsgemäss wird dieses Ziel durch eine Anpass-Schaltung erwirkt, die die Merkmale des Anspruchs 1 aufweist. Insbesondere werden diese Ziele durch eine Anpass-Schaltung erreicht, die elektrische Anschlussmittel zum elektrischen Anschluss zwischen jeder Versorgungsphase der Verbindungskabel und der Drehfeldmaschine aufweist. Mindestens ein elektrisches Filterelement ist vorgesehen, wobei ein Ende jedes Filterelements an eine Versorgungsphase geschaltet ist. Erfindungsgemäss weist jedes Filterelement eine positive Phasenlage in den hohen Frequenzen auf.

Die Erfindung beruht auf der Feststellung, dass die Schaltung der Drehfeldmaschine mit den Verbindungskabeln zumindest in den hohen Frequenzen ein kapazitives Verhalten aufweist. Insbesondere verhalten sich viele Drehfeldmaschinen (vor allem viele Motoren) in den tiefen Frequenzen induktiv, aber stark kapazitiv in den höheren Frequenzbereichen. Um dieses Verhalten auszugleichen, ist es demzufolge erfindungsgemäss angebracht, Filterelemente einzusetzen, die dieses kapazitive Verhalten in den hohen Frequenzen zumindest teilweise ausgleichen können, damit transiente, hochfrequente Reflexionen effektiv abgedämpft werden.

Es mögen schon Lastfiltereinrichtungen 10 bekannt sein, die zwischen den Umrichter 1 und eine Drehfeldmaschine 4 geschaltet werden, um die Änderungsgeschwindigkeit der ausgangsseitigen Spannung eines Umrichters zu begrenzen. Solche Komponenten, die in der Regel direkt am Ausgang des Umrichters montiert werden und nicht direkt am Eingang der Drehfeldmaschine, werden jedoch nicht auf die Impedanz der Drehfeldmaschine oder an die Wellenimpedanz der Verbindungskabel abgestimmt; sie wirken eher als allgemeine Tiefpassfilter, die hohe Frequenzbereiche dämpfen. Je nach Länge der Verbindungskabel und je nach Typ der Drehfeldmaschine mögen solche Filter effektiv oder nicht effektiv gegen Reflexionen wirken. Insbesondere werden in solchen Umrichter-Ausgangsfiltern die Werte der Filterkomponenten nicht derart gewählt, dass die Filterausgangsimpedanz der Wellenimpedanz entspricht. Da die Impedanz dieser bekannten Filtereinrichtungen nicht an die Impedanz der Verbindungskabel oder des Motors angepasst ist, können solche Filter in manchen Frequenzbereichen die Reflexionen sogar verstärken.

Im folgenden wird die Erfindung anhand von Ausführungsbeispielen und der Zeichnungen näher erläutert. Es zeigen:

Fig. 1 eine bekannte Anordnung mit einem Umrichter, Verbindungskabeln und einer Drehfeldmaschine.

Fig. 2 eine bekannte äquivalente Schaltung eines kleinen Stücks der Verbindungskabel.

Fig. 3 eine bekannte Anordnung mit einem Umrichter, Verbindungskabeln, einer Drehfeldmaschine und einer RC- Anpass-Schaltung am motorseitigen Ende der Verbindungskabel.

Fig. 4 schematisch die durch Reflexionen entstandenen Überspannungen in einem schlecht angepassten System.

Fig. 5a und 5b als Funktion der Frequenz die Amplitude und Phase der Impedanz eines typischen Motors.

Fig. 6 eine Ausführungsvariante einer Einrichtung mit einem Umrichter, Verbindungskabeln, einer Drehfeldmaschine und einer erfindungsgemässen RLC- Anpass-Schaltung am motorseitigen Ende der Verbindungskabel.

Fig. 7a die Amplitude der Impedanz der mathematisch gerechneten idealen Anpassimpedanz.

Fig. 7b die Phase der mathematisch gerechneten idealen Anpassimpedanz.

Fig. 8a die Amplitude der Impedanz einer mit RLC-Komponenten nachgebildeten Anpassimpedanz.

Fig. 8b die Phase einer mit RLC-Komponenten nachgebildeten Anpassimpedanz.

Fig. 9 als Vergleich die Amplitude der Wellenimpedanz und die Amplitude der Impedanz der Parallelschaltung der erfindungsgemässen Anpass-Schaltung mit der Drehfeldmaschine, als Funktion der Frequenz.

Die Figur 5a zeigt die Amplitude der Impedanz einer Drehfeldmaschine 4 als Funktion der Frequenz. Die Figur 5b zeigt die Phase der Impedanz für dieselbe Drehfeldmaschine. Es ist aus diesen Figuren ersichtlich, dass diese Drehfeldmaschine induktiv in den niedrigen Frequenzen und kapazitiv (mit einer negativen Phasenlage) in den hohen Frequenzen wirkt. Im dargestellten Beispiel befindet sich die Transition bei etwa 160 Kilohertz.

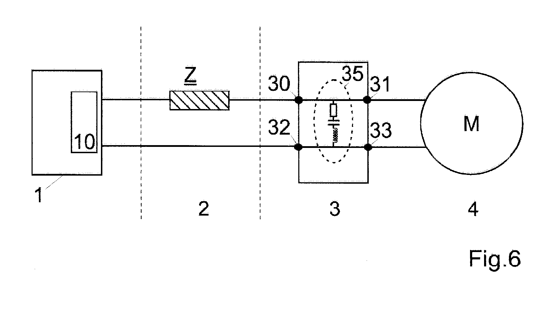

Erfindungsgemäss wird eine Anpass-Schaltung 3 zwischen den Verbindungskabeln 2 und der Drehfeldmaschine 4 eingesetzt, wie aus der Figur 6 ersichtlich. Um die kapazitive Impedanz der Drehfeldmaschine an die Impedanz der Verbindungskabel anzupassen, muss die Impedanz der Anpass-Schaltung mindestens in den hohen Frequenzen induktiv sein und demzufolge eine positive Phasenlage in den hohen Frequenzen aufweisen.

Um Reflexionen zu vermeiden, sollte idealerweise die Impedanz $Z_{Match}$ der Anpass-Schaltung 3 derart ausgewählt werden, dass die Wellenimpedanz $Z_W$ der Verbindungskabel 2 für den gesamten Frequenzbereich gleich ist wie die Impedanz der Parallelschaltung der Anpass-Schaltung 3 zur Drehfeldmaschine 4 ist:

$$Z_W = \frac{Z_{Match} \cdot Z_{Motor}}{Z_{Match} + Z_{Motor}}$$

wo $Z Motor$ die Impedanz der Drehfeld-maschine 4 ist, so dass

$$Z_{Match} = \frac{Z_W \cdot Z_{Motor}}{Z_{Motor} - Z_W}$$

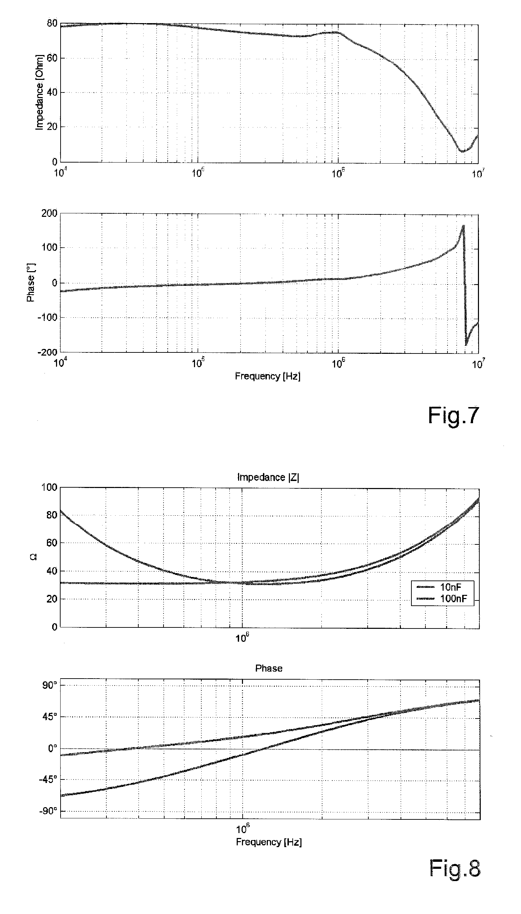

Die Figur 7a zeigt die Amplitude der Impedanz der mathematisch idealen Anpass-Schaltung, während dessen die entsprechende ideale Phase auf der Figur 7b dargestellt ist. Diese ideale Impedanz ist nur von der Wellenimpedanz $Z_W$ und von der Impedanz $Z_{Motor}$ der Drehfeldmaschine 4 abhängig, nicht jedoch von der Länge der Verbindungskabel 2.

Eine solche ideale Impedanz kann jedoch nur mit vielen passiven Bauteilen, oder mit einem komplexeren aktiven Filter nachgebildet werden. Komplexe Filter sind jedoch teuer, störanfällig, voluminös und oft stromverbrauchend. Es ist wünschenswert, eine Anpass-Schaltung mit möglichst wenigen Bauteilen zu bauen, auch wenn dies zu einer weniger effektiven Anpassung an die Wellenimpedanz der Verbindungskabel 2 führt. Erfindungsgemäss sollte sich jedoch die Anpassung der Impedanz dem idealen Wert bei der Resonanzfrequenz der Verbindungskabel möglichst annähern.

In einer bevorzugten Ausführungsvariante besteht die nachgebildtte Anpass-Schaltung $Z_{Match}$ aus einem Filterelement 35 mit einer Serienschaltung eines Widerstands $R_{match}$ mit einer Spule $L_{match}$ und einer Kapazität $C_{match}$:

$$Z_{Match} = R_{Match} + j\omega L_{Match} + \frac{1}{j\omega \cdot C_{Match}}$$

Die Werte $R_{Match}$, $L_{Match}$ und $C_{Match}$ werden derart gewählt, dass an der Resonanzfrequenz eines Verbindungskabels 2 mit der gewünschten Länge die Anpass-Schaltung $Z_{Match}$ möglichst nah zur idealen gerechneten Anpass-Schaltung ist. Die Resonanzfrequenz eines typischen Verbindungskabels mit einer typischen Länge von 5Metern beträgt beispielsweise 3.3 MHz. Dies führt zu folgenden möglichen Werten für die Komponenten $R_{Match}$, $L_{Match}$ und $C_{Match}$:

$$R_{Match} = 31.7\Omega$$

$$L_{Match} = 1.75\ \mu H$$

$$C_{Match} = 10nF \text{ (beispielsweise)}$$

Je nach Typ und Länge der Verbindungskabel 2 und nach Typ der Drehfeldmaschine 4 können leicht unterschiedliche Werte ausgewählt werden. Für die meisten Anwendungen werden jedoch gute Ergebnisse erreicht, wenn der Widerstand $R_{Match}$ einen Wert zwischen 1Ω und 10KΩ und die Spule $L_{Match}$ einen Wert zwischen 10nH und 100µH aufweist.

Die Figur 8a zeigt die Amplitude der Impedanz der derart nachgebildeten RLC-Anpass-Schaltung, während die entsprechende Phase auf der Figur 8b dargestellt ist. Man sieht, dass die Amplitude (50Ω) und Phase (ca 50°) bei der Resonanzfrequenz (ca 3.3 MHz) beinahe die idealen berechneten Werte haben.

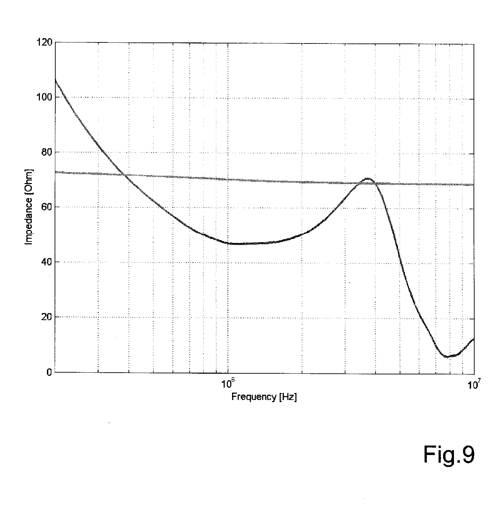

Die Figur 9 vergleicht die Kabelwellenimpedanz mit der resultierenden Impedanz der Parallelschaltung der nachgebildeten Anpass-Schaltung mit der Drehfeldmaschine. Die Werte sind fast genau abgestimmt für die Resonanzfrequenz 3.3 MHz. Unter dieser Frequenz ist die Abstimmung zwar nicht perfekt, bleibt aber relativ gut in einem grossen Frequenzbereich. Mit einem Lastfilter 10 am Ausgang des Umrichters 1 und durch die Verbindungskabel 2 besteht weiterhin die Möglichkeit, die übrigen, weniger dominante Reflexion zwischen Umrichter und Kabel zu eliminieren.

Für eine einphasige Drehfeldmaschine 3 kann ein Filterelement 35 mit drei in Serie geschalteten Komponenten parallel zur Drehfeldmaschine 4 zwischen Versorgungsphase und Erde geschaltet werden. Für eine dreiphasige Drehfeldmaschine kann ein solches Filterelement in ∆-Schaltung, zwischen allen Versorgungsphasen motorseitig geschaltet werden. Das RLC-Glied kann entweder aus drei beziehungsweise zwei diskreten Bauteilen (Wicklung einer Spule mit einem Widerstandsdraht) hergestellt werden.

Als Variante könnte die Impedanz $Z_{Match}$ , oder nur die Kapaztät $C_{Match}$, statt in $\Delta$-Schaltung auch in Form einer Stern-Schaltung (nicht dargestellt) geschaltet werden.

Die Anpass-Schaltung wird vorzugsweise in einem Gehäuse montiert, das über mechanische Befestigungsmittel zur Befestigung an oder in einem Drehfeldmaschinengehäuse und über elektrische Anschlussmittel (zum Beispiel Klemmen 30, 31, 32, 33 zum elektrischen Anschluss zwischen jeder Versorgungsphase der benannten Verbindungskabel 2 und der benannten Drehfeldmaschine 4) verfügt. Die Anpass-Schaltung kann aber auch ohne Gehäuse innerhalb des Drehfeldmaschinengehäuses montiert oder in das Kabelende integriert werden

In einer Variante ist die Induktivität $L_{MATCH}$ und/oder die Kapazität $C_{MATCH}$ anpassbar, um die Impedanz der Anpass-Schaltung an die Wellenlänge des verwendeten Kabels und/oder an die Drehfeldmaschine anzupassen.

**Patentansprüche**

1. Anpass-Schaltung (3) zur Begrenzung der Reflexionen in Verbindungskabeln (2) zu Drehfeldmaschinen (1), wobei die benannten Verbindungskabel (2) eine bestimmte Wellenimpedanz ($Z_w$) aufweisen, wobei die benannte Drehfeldmaschine eine bestimmte Drehfeldmaschinenimpedanz ($Z_{motor}$) aufweist, mit folgenden Merkmalen:

   elektrische Anschlussmittel (30, 31, 32, 33) zum elektrischen Anschluss zwischen jeder Versorgungsphase der benannten Verbindungskabel (2) und der benannten Drehfeldmaschine (4),
   mindestens ein elektrisches Filterelement (35), wobei ein Ende jedes Filterelements an eine Versorgungsphase geschaltet ist,

   **dadurch gekennzeichnet, dass** jedes benannte Filterelement (35) eine positive Phasenlage in den hohen Frequenzen aufweist, derart, dass das kapazitive Verhalten der Schaltung der benannten Drehfeldmaschine (4) in den benannten hohen Frequenzen mindestens teilweise ausgeglichen wird.

2. Die Anpass-Schaltung von Anspruch 1, in jedes benannte Filterelement (35) eine positive Phasenlage in den hohen Frequenzen aufweist, derart, dass das kapazitive Verhalten der Schaltung der benannten Drehfeldmaschine (4) mit den benannten Verbindungskabeln in den benannten hohen Frequenzen mindestens teilweise ausgeglichen wird.

3. Die Anpass-Schaltung von einem der Ansprüche 1 bis 2, in welcher die Impedanz des benannten Filterelements (35) derart angewählt wird, dass sie für die Anpassung der Impedanz der Parallelschaltung einer benannten Drehfeldmaschine (4) mit der benannten Anpass-Schaltung an die Wellenimpedanz eines Verbindungskabel (2) an die Resonanzfrequenz des benannten Verbindungskabels (2) geeignet ist.

4. Die Anpass-Schaltung von einem der Ansprüche 1 bis 3, in welcher das benannte Filterelement (35) eine Spule ($L_{Match}$) aufweist.

5. Die Anpass-Schaltung von einem der Ansprüche 1 bis 4, in welcher das benannte Filterelement (35) aus einem passiven RLC Filter besteht.

6. Die Anpass-Schaltung von Anspruch 5, in welcher das benannte Filterelement (35) aus drei diskreten seriegeschalteten R, L und C Komponenten besteht.

7. Die Anpass-Schaltung von Anspruch 4, in welcher das benannte Filterelement (35) aus einer diskreten Kapazität ($C_{Match}$) und einem in Serie geschalteten RL Bauteil besteht.

8. Die Anpass-Schaltung von einem der Ansprüche 4 bis 7, in welcher der benannte Widerstand ($R_{Match}$) einen Wert zwischen 1$\Omega$ und 10K$\Omega$ und die benannte Spule ($L_{Match}$) einen Wert zwischen 10 nH und 100µH aufweist.

9. Die Anpass-Schaltung von einem der Ansprüche 1 bis 8, in welcher die benannte Drehfeldmaschine (4) dreiphasig ist, in welcher die benannten Verbindungskabel (2) drei Versorgungsphasen aufweisen, und in welcher ein benanntes Filterelement (35) zwischen jede benannte Versorgungsphase geschaltet ist.

10. Die Anpass-Schaltung von einem der Ansprüche 1 bis 9, in welcher die benannte Drehfeldmaschine (4) dreiphasig ist, in welcher die benannten Verbindungskabel (2) drei Versorgungsphasen aufweisen, und in welcher ein benanntes Filterelement (35) zwischen jede benannte Versorgungsphase und die Erde geschaltet ist.

11. Die Anpass-Schaltung von einem der Ansprüche 1 bis 10, mit mechanischen Befestigungsmitteln zur Befestigung an oder in einem Drehfeldmaschinengehäuse.

12. Die Anpass-Schaltung von einem der Ansprüche 1 bis 11, welche im Kabelende integriert ist.

13. Die Anpass-Schaltung von einem der Ansprüche 1 bis 12, in welchem jedes benannte Filterelement (35) eine negative Phasenlage in den tiefen Frequenzen aufweist, derart, dass das induktive Verhalten der Schaltung der benannten Drehfeldmaschine (4) mit den benannten Verbindungskabeln in den benannten niedrigen Frequenzen mindestens teilweise ausgeglichen wird.

14. Baugruppe mit folgenden Merkmalen:

eine Drehfeldmaschine (4),
Verbindungskabel (2), um die benannte Drehfeldmaschine mit Strom zu versorgen,
eine zwischen dem benannten Verbindungskabel (2) und der benannten Drehfeldmaschine (4) geschaltete Anpass-Schaltung (3) zur Anpassung der Impedanz der Drehfeldmaschine (4) an die Wellenimpendanz der benannten Verbindungskabel (2),

**dadurch gekennzeichnet, dass** die benannte Anpass-Schaltung (3) eine positive Phasenlage in den hohen Frequenzen aufweist, derart, dass das kapazitive Verhalten der Schaltung der benannten Drehfeldmaschine (4) in den benannten hohen Frequenzen mindestens teilweise ausgeglichen wird.

15. Die Baugruppe des Anspruchs 14, in welcher die benannte Anpass-Schaltung (3) eine positive Phasenlage in den hohen Frequenzen aufweist, derart, dass das kapazitive Verhalten der Schaltung der benannten Drehfeldmaschine (4) mit den benannten Verbindungskabeln in den benannten hohen Frequenzen mindestens teilweise ausgeglichen wird.

16. Die Baugruppe eines der Ansprüche 14 bis 15, in welcher die benannte Anpass-Schaltung (3) an oder im Gehäuse der benannten Drehfeldmaschine montiert ist.

17. Die Baugruppe eines der Ansprüche 14 bis 16, in welcher die benannte Anpass-Schaltung (3) die Merkmale eines der Ansprüche 1 bis 13 aufweist.

18. Die Baugruppe eines der Ansprüche 14 bis 17, in welcher die Impedanz der Parallelschaltung der benannten Anpass-Schaltung (2) mit der benannten Drehfeldmaschine (4) an die Impedanz ($Z_w$) der benannten Verbindungskabel (2) an die Resonanzfrequenz angepasst ist.

19. Die Baugruppe eines der Ansprüche 14 bis 18, mit einem Umrichter (1) am Ende der benannten Verbindungskabel (2) entgegengesetzt zur benannten Drehfeldmaschine (1), und mit einem Lastfilter (10) am Ausgang des benannten Umrichters (1).

20. Verfahren zur Anpassung eines Filterelements zur Begrenzung der Reflexionen in Verbindungskabel (2) zu einer Drehfeldmaschine (1), mit folgenden Schritten:

Anschluss des Filterelements an die benannte Drehfeldmaschine und an die benannten Verbindungskabel, wobei ein Ende des Filterelements an eine Versorgungsphase geschaltet ist,
Anpassung der Phasenlage des Filterelements an das kapazitive Verhalten der Schaltung der benannten Drehfeldmaschine (4) mit den Verbindungskabeln in den hohen Frequenzen.

21. Das Verfahren des Anspruchs 20, in welchem die benannte Anpassung von der Länge der benannten Verbindungskabel abhängig ist.

Fig.1

Fig.2

Fig.3

Fig.4

Fig.5

Fig.6

Fig.7

Fig.8

Fig.9

**Europäisches Patentamt**

**EUROPÄISCHER RECHERCHENBERICHT**

Nummer der Anmeldung

EP 03 10 3641

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | VON JOUANNE A ET AL: "Filtering techniques to minimize the effect of long motor leads on PWM inverter fed AC motor drive systems" INDUSTRY APPLICATIONS CONFERENCE, 1995. THIRTIETH IAS ANNUAL MEETING, IAS '95., CONFERENCE RECORD OF THE 1995 IEEE ORLANDO, FL, USA 8-12 OCT. 1995, NEW YORK, NY, USA,IEEE, US, 8. Oktober 1995 (1995-10-08), Seiten 37-44, XP010193045 ISBN: 0-7803-3008-0 * das ganze Dokument * --- | 1,3-5,9, 14,15, 17-20 | H02M1/12 |
| A | EP 0 829 948 A (ASEA BROWN BOVERY) 18. März 1998 (1998-03-18) * Spalte 2, Zeile 46 - Spalte 3, Zeile 51; Abbildungen 1-3 * --- | 1,4-6,9, 10,14, 17,20 | |
| A | US 5 831 410 A (SKIBINSKI) 3. November 1998 (1998-11-03) * Spalte 1, Zeile 1 - Spalte 11, Zeile 22; Abbildungen 1-7B * --- | 1,3-6,8, 9,14,17, 20,21 | RECHERCHIERTE SACHGEBIETE (Int.Cl.7) H02M |
| A | JOUANNE VON A ET AL: "DESIGN CONSIDERATIONS FOR AN INVERTER OUTPUT FILTER TO MITIGATE THEEFFECTS OF LONG MOTOR LEADS IN ASD APPLICATIONS" IEEE TRANSACTIONS ON INDUSTRY APPLICATIONS, IEEE INC. NEW YORK, US, Bd. 33, Nr. 5, 1. September 1997 (1997-09-01), Seiten 1138-1145, XP000739829 ISSN: 0093-9994 * das ganze Dokument * --- -/-- | 1,14,19, 20 | |

Der vorliegende Recherchenbericht wurde für alle Patentansprüche erstellt

| Recherchenort | Abschlußdatum der Recherche | Prüfer |
|---|---|---|
| MÜNCHEN | 19. Februar 2004 | Calarasanu, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

# EP 1 411 621 A1

**Europäisches Patentamt**

## EUROPÄISCHER RECHERCHENBERICHT

Nummer der Anmeldung

EP 03 10 3641

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | ERKUAN ZHONG ET AL: "IMPROVEMENTS IN EMC PERFORMANCE OF INVERTER-FED MOTOR DRIVES" IEEE TRANSACTIONS ON INDUSTRY APPLICATIONS, IEEE INC. NEW YORK, US, Bd. 31, Nr. 6, 1. November 1995 (1995-11-01), Seiten 1247-1256, XP000550008 ISSN: 0093-9994 * das ganze Dokument * ----- | | |

**RECHERCHIERTE SACHGEBIETE (Int.Cl.7)**

Der vorliegende Recherchenbericht wurde für alle Patentansprüche erstellt

| Recherchenort | Abschlußdatum der Recherche | Prüfer |
|---|---|---|
| MÜNCHEN | 19. Februar 2004 | Calarasanu, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

13

EP 1 411 621 A1

## ANHANG ZUM EUROPÄISCHEN RECHERCHENBERICHT
## ÜBER DIE EUROPÄISCHE PATENTANMELDUNG NR.

EP 03 10 3641

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-02-2004

| Im Recherchenbericht angeführtes Patentdokument | | Datum der Veröffentlichung | Mitglied(er) der Patentfamilie | | Datum der Veröffentlichung |
|---|---|---|---|---|---|
| EP 829948 | A | 18-03-1998 | DE | 19637290 A1 | 19-03-1998 |
| | | | EP | 0829948 A2 | 18-03-1998 |
| US 5831410 | A | 03-11-1998 | KEINE | | |

EPO FORM P0461

Für nähere Einzelheiten zu diesem Anhang : siehe Amtsblatt des Europäischen Patentamts, Nr.12/82

14